# EUROPEAN PATENT APPLICATION

(11) **EP 1 936 942 A1**
(43) Date of publication of application: **25.06.2008**
(21) Application number: 07023581.7
(22) Date of filing: 05.12.2007
(51) Int. Cl.: H04N 1/00

(54) **Image scanning device**

(30) Priority: 20.12.2006 JP 2006342634; 11.09.2007 JP 2007235072
(71) Applicant: Brother Kogyo Kabushiki Kaisha, Nagoya, Aichi 467-8561 (JP)
(72) Inventor: Takahata, Hirotsugu, Nagoya Aichi 467-8561 (JP)
(74) Representative: Kuhnen & Wacker

(57) **Abstract**

An image scanning device can include an input portion capable of inputting a setting value of a setting item related to a scan condition, a scanning portion capable of scanning a document on the basis of the setting value to obtain image data; and a control portion capable of creating a file name using a character string associated with the setting value, assigning the created file name to the image data obtained by the scanning portion, and storing the image data.

## Description

The present disclosure relates to an image scanning device.

Conventionally, an image scanning device has included a function of storing image data obtained by scanning a document, in a server computer connected to the device, a removable memory and the like, as a file. The methods by which such an image scanning device assigns a file name to image data to be stored include prompting the user to input a file name by a key operation, or automatically assigning a unique (only one) file name by a combination of a common character string and a sequential number.

However, it is not sufficient merely to assign a unique name as the file name of the image data since the user may have difficulty remembering the purpose of creating the image data at a later time. In addition, the method for instructing the user to input a name is troublesome because the user has to input characters each time the user saves image data.

In view of the above circumstances, what is needed for an image scanning device is a technique capable of saving users from having to input a file name, and still is capable of facilitating the management of image data.

An image scanning device can include an input portion capable of inputting a setting value of a setting item related to a scan condition, a scanning portion capable of scanning a document on the basis of the setting value to obtain image data; and a control portion capable of creating a file name using a character string associated with the setting value, assigning the created file name to the image data obtained by the scanning portion, and storing the image data.

Illustrative aspects in accordance with the invention will be described in detail with reference to the following figures wherein:
FIG. 1 is an external perspective view of a multifunction device in accordance with an illustrative aspect of the present invention;
FIG. 2 is a block diagram schematically showing an electrical configuration of the multifunction device;
FIG. 3 is a flowchart showing a flow of a normal scan process;
FIG. 4 is a flowchart showing a flow of creating and assigning a file name;
FIG. 5 is a flowchart showing a flow of a simple scan process;
FIG. 6 is a drawing showing an example of registration contents of a one-touch key;
FIG. 7 is a drawing showing another example of registration contents of a one-touch key;
FIG. 8 is a drawing showing yet another example of registration contents of a one-touch key; and
FIG. 9 is a drawing showing yet another example of registration contents of a one-touch key.

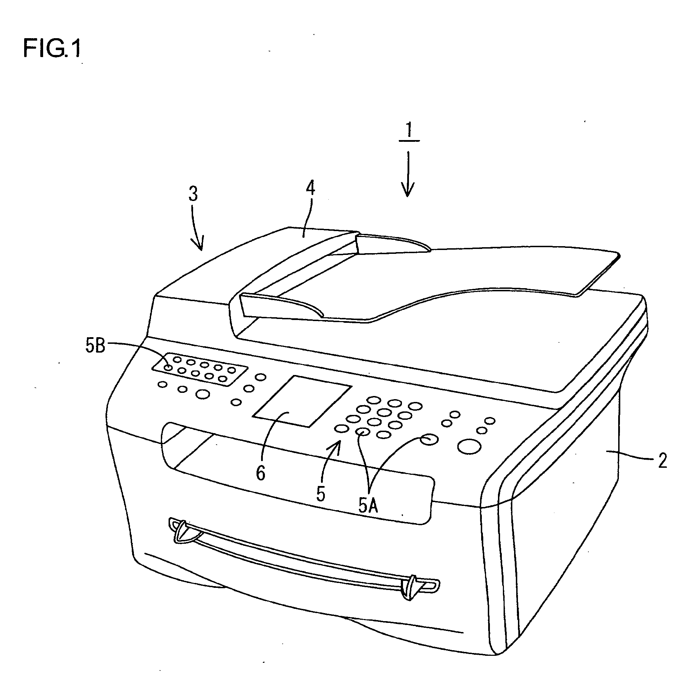

Hereinafter, an illustrative aspect of the present invention will be described with reference to FIGS. 1 to 9.

1. External configuration of a multifunction device

This illustrative aspect shows an example in which the present invention is applied to a multifunction device 1 (an example of the image scanning device) having various functions such as a scanner function, a printer function, copy function, facsimile function and the like. FIG. 1 is an external perspective view of the multifunction device 1.

As shown in FIG. 1, the multifunction device 1 has a scanning portion 3 for scanning a document on an upper portion of a main body 2. This scanning portion 3 is what is called a flatbed. A document placed on a document scanning surface (not shown) is read by an image sensor (not shown) such as a contact image sensor (CIS), and image data corresponding to the original document image is obtained and outputted. An automatic document feeder (ADF) 4 is disposed above the document scanning surface capable of opening and closing toward the document scanning surface. This ADF 4 feeds a placed document to a position in which the image sensor can scan the document.

An operation portion 5 (an example of an input portion, an allocation portion, an association portion, a sequence setting portion, a selection portion, and a candidate selection portion) having a plurality of buttons 5A and a display portion 6 (an example of a candidate display portion) consisting of a liquid crystal display are disposed on an upper front face of the multifunction device 1.

2. Electrical configuration of the multifunction device

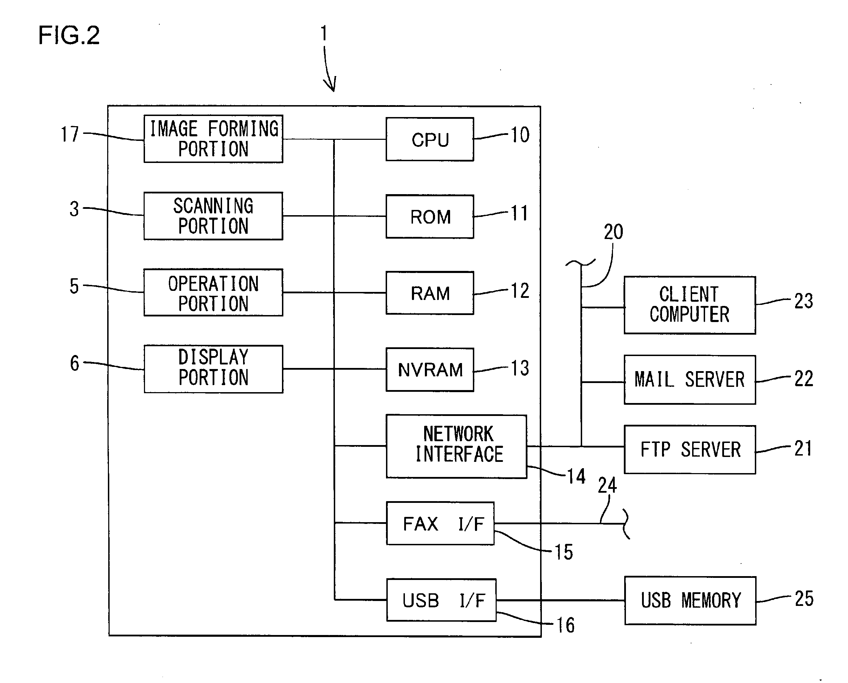

FIG. 2 is a block diagram schematically showing an electrical configuration of the multifunction device 1. As shown in FIG. 2, this multifunction device 1 includes a CPU 10 (an example of a control portion, a file name creation portion, a file name assignment portion, a storage portion, a registration portion, a read portion), a ROM 11, a RAM 12, an NVRAM 13 (an example of a registration portion), a network interface 14, a facsimile interface 15, a USB interface 16, to which an image forming portion 17, aforementioned scanning portion 3, an operation portion 5, and a display portion 6 are connected.

The ROM 11 contains various kinds of programs for controlling an operation of this multifunction device 1. The CPU 10 stores the processing results in the RAM 12 or the NVRAM 13 and performs control on each portion according to a program read from the ROM 11.

The network interface 14 is connected to an FTP server 21, a mail server 22, a client computer 23 and the like through a communication line 20. The facsimile interface 15 is connected to a phone line 24. A USB memory 25 (an example of a memory) and the like is removably connected to the USB interface 16. The image forming portion 17 forms an image on a recording medium such as a paper sheet, plastic sheet, or the like on the basis of image data.

3. Operation of scan process

Hereinafter, the operation of a scan process executed under control of the CPU 10 will be described. The scan process has two execution methods: a normal scan process and a simple scan process for simplifying an input of a setting value for each setting item.

(Normal scan process)

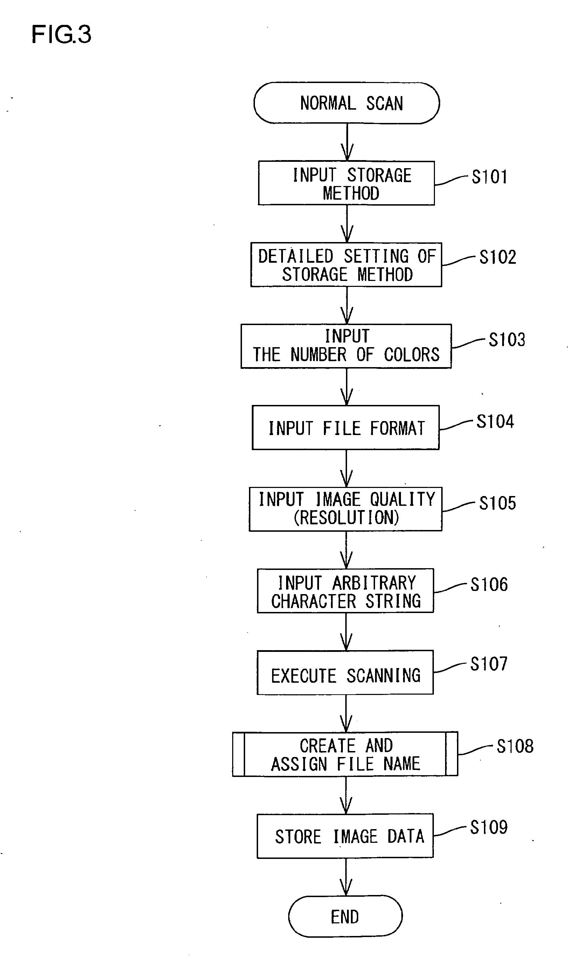

First, the normal scan process will be described. FIG. 3 is a flowchart showing a flow of the normal scan process.

When a user places a document on the document scanning surface or an ADF 4 of the scanning portion 3, and presses a predetermined button 5A on the operation portion 5 to input an instruction to start the normal scan process, the normal scan process will start. In this normal scan process, the CPU 10 prompts the user to input a setting value (setting content) for each setting item (S101 to S106) as described hereinafter.

First, the CPU 10 instructs the display portion 6 to display a screen for prompting the user to select a method of storing image data to be obtained from the scanning portion 3 (S101). Here, the image data storage method (an example of a setting item for a storage method) can be selected, for example, from among a method of storing image data in an FTP server 21 or a client computer 23 connected through a network interface 14 (an example of a setting item), a method of sending image data to a mail server 22 which returns the image data as an email attachment file to a predetermined address (an example of a setting value), a method of storing image data in a USB memory 25 connected to a USB interface 16 (an example of a setting value) and the like.

When the user selects a storage method of image data from the operation portion 5, the CPU 10 instructs the display portion 6 to display a screen for detailed setting (an example of a setting item related to the storage method) corresponding to the selected storage method of the image data (S102). In this detailed setting, when image data is stored in an FTP server, the address of the FTP server, the user name, the password, the name of a destination folder for storage and the like (an example of a setting item) are inputted. When image data is sent as an email, the address of the mail server 22, the user name, the password, the email address of the destination and the like (an example of a setting value) are inputted. When image data is stored in a client computer 23, the computer name, the name of a destination folder for storage and the like (an example of a setting value) are inputted. When image data is stored in a USB memory 25, the name of a destination folder for storage and the like (an example of a setting value) are inputted.

Next, the CPU 10 instructs the display portion 6 to display a screen for prompting the user to select the number of colors (an example of a setting item for a scan condition) (S103) . Here, the user can select monochrome or color and a gradation from among a plurality of candidates such as "Black & White (one bit black and white), "True Gray (24-bit grayscale)", "True color (24-bit color)" and the like (an example of a setting value) (an example of an operation of a candidate display portion and a candidate selection portion).

Next, the CPU 10 instructs the display portion 6 to display a screen for prompting the user to select a file format of image data (an example of a setting item for a scan condition) (S104). Here, the display portion 6 displays a plurality of file format candidates such as "JPEG", "PDF", TIFF", "BMP", "GIF", "PNG" and the like (an example of a setting value) . The user can select one of them as a setting value (an example of an operation of a candidate display portion and a candidate selection portion).

Next, the CPU 10 instructs the display portion 6 to display a screen for prompting the user to select an image quality at the time of scanning (an example of a setting item for a scan condition) (S105) . Here, the display portion 6 displays a plurality of resolution candidates such as "100dpi", "200dpi", and "600dpi" (an example of a setting value). The user can select one of them as a setting value (an example of an operation of a candidate display portion and a candidate selection portion). It should be noted that it is not necessary to display a character string directly showing a numerical value of a resolution but a character string indicating an image quality such as "Normal", "Fine", and "S-Fine" may be displayed instead so that the user can select, and the resolution corresponding to the character string selected by the user may be used as the setting value.

Next, the CPU 10 instructs the display portion 6 to display a screen for prompting the user to input an arbitrary character string to be used as a file name (S106). Here, the user inputs an arbitrary character string from the operation portion 5.

Next, the CPU 10 instructs the scanning portion 3 to execute scanning of a document (S107). Here, the CPU 10 performs image processing on image data obtained from the scanning portion 3, and creates an image data file in a RAM 12 according to each setting value of "number of colors", "file format", and "image quality (resolution)" set by the user.

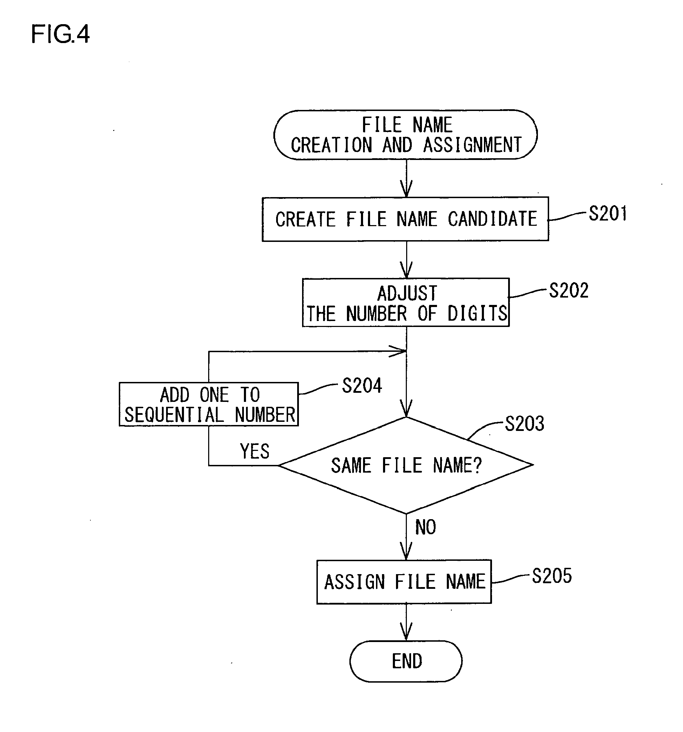

Next, the CPU 10 creates a file name of image data, and assigns the file name to the image data (S108). FIG. 4 is a flowchart showing a flow of creating and assigning a file name. As shown in the figure, first, the CPU 10 creates a candidate of a file name (S201). Here, the file name is created by use of an arbitrary character string, a sequential number, and an extension. For example, assuming that the user inputs a character string "IMAGE", the default value for the number of digits of the sequential number is five, and the extension corresponding to the file format is "PDF", "IMAGE00001.PDF" is created as a file name candidate.

Next, if the number of characters of the file name candidate exceeds a limited number of characters of a file name for use in the destination in which image data is stored, the number of digits of the sequential number is adjusted to be less than or equal to the limited number (specified number) of characters of the file name (S202). For example, assume that if the number of digits of the sequential number is five or four, the number of characters of the file name candidate exceeds a limited number of characters. And if the number of digits of the sequential number is three, the number of characters is less than or equal to the limited number of characters. In that case, the number of digits of the sequential number is determined to be three (such as "001").

Then, the CPU 10 judges whether or not the same file name as the file name candidate exists in a destination folder (or email for an email attachment) for storing the image data (S203). If the same file name exists (S203: Yes), one is added to the sequential number of the file name candidate (S204). Then, control is returned to S203, where again the CPU 10 judges whether or not the same file name as the file name candidate exists. If the same file name does not exist (S203: No), the file name candidate is assigned as the file name to the image data (S205). Then, the CPU 10 terminates the file name creation and assignment process. Accordingly, a unique file name can be assigned to image data to be stored in a destination folder and the like.

In this way, the CPU 10 stores the image data to which a file name is assigned at S108, according to the specified storage method (S109), and then terminates the normal scan process.

(Simple scan process)

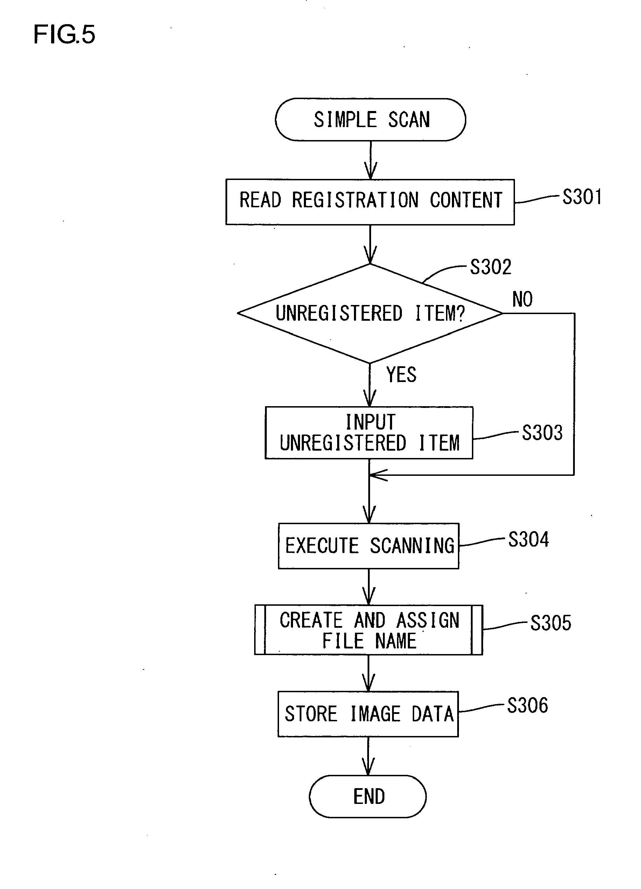

Hereinafter, the simple scan process will be described. FIG. 5 is a flowchart showing a flow of a simple scan process.

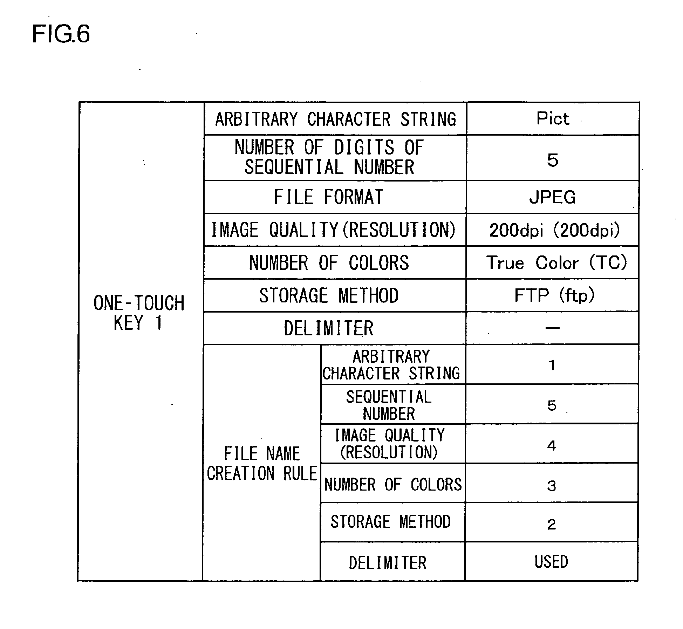

The operation portion 5 is provided with a plurality of buttons called one-touch keys (an example of keys shown in 5B of FIG. 1). The one-touch key 5B allows the user to omit at least part of the input operation for each step shown in FIG. 3. More specifically, the user can assign all or part of the setting values of the seven setting items shown in FIG. 6 to a set of setting values (an example of a plurality of setting contents) to be registered. This registration is performed by an input from the operation portion 5 or from an external client computer 23 and the like, and the registration contents are stored in an NVRAM 13 (an example of the registration portion).

FIG. 6 is a drawing showing an example of registration contents of a one-touch key 5B. The figure lists "arbitrary character string", "file format", "image quality (resolution)", "number of colors", and "storage method" as a setting item. One setting value can be selected and registered from a plurality of candidates in the same way as for the aforementioned simple scan process. Alternatively, the value is set as "unregistered" and will be inputted later. It should be noted that a setting value of the detailed setting (same as the one detailed in S102) corresponding to the storage method can also be associated with a one-touch key 5B and registered (not shown).

In addition, the number of digits of a sequential number to be assigned to a file name is registered as the setting value in the setting item "number of digits of sequential number". A symbol to be used as a separator of character strings to be used in the file name is registered in the setting item "delimiter". More specifically, for example, " (underline)", ", (comma)", "() (parentheses)", "- (hyphen)", and the like can be registered as a setting value. Further, those symbols can be set as "unregistered".

A character string associated with the corresponding setting value is registered for each setting item of "file format", "image quality (resolution)", "number of colors", and "storage method" described above. In the FIG. 6, character strings associated with these setting values are shown in parentheses following a setting value. For example, in the setting item "storage method", the setting value meaning that "image data is stored in an FTP server" is associated with a character string such as "ftp" or "F". The setting value meaning that "image data is attached to an email" is associated with a character string such as "mail". The user can associate these setting values with arbitrary character strings. For example, with reference to the setting item "image quality (resolution)", a character string such as "high image quality" and "fine" can be associated with a setting value for "600 dpi". Alternatively, the character string corresponding to the setting value can be set as "unregistered". The above association operation is performed by inputting character information from the operation portion 5 or from an external client computer 23 and the like, and the contents are stored in an NVRAM 13. These character strings are used to create a file name as described later.

Further, a setting item for a predetermined creation rule for creating a file name is provided for a registration content corresponding to a one-touch key 5B. A number indicating the sequence for using a corresponding character string at the time of file name creation is registered as a setting value starting at one and consecutively incrementing for the setting items "arbitrary character string", "sequential number", "image quality (resolution)", "number of colors", and "storage method". For these setting items, when a character string corresponding to a file name is not used, the setting value "not used" can also be registered. For a setting item "delimiter", a setting value indicating "use a delimiter" or "not use a delimiter" can be registered as a file name. The creation rule predetermines the sequence of each setting content in a file name to be created, and also predetermines whether or not the setting item is used as a part of the file name. The creation rule is stored in an NVRAM 13 for each one-touch key 5B.

When the user places a document on the scanning portion 3 and presses one of the one-touch keys 5B, the CPU 10 starts the simple scan process. As shown in FIG. 5, first, the CPU 10 reads the registration content corresponding to a pressed one-touch key 5B from the NVRAM 13 (S301). If the registration content contains a setting item "unregistered" (S302: Yes), the CPU 10 instructs the display portion 6 to display a screen prompting the user to input a setting value for each setting item (S303) in the same way as for the aforementioned normal scan process. Here, even if the setting item "arbitrary character string" or "delimiter" is set as "unregistered", and if "not used" is set in the setting item of the "file name creation rule", then a screen prompting the user to input a setting value is not displayed. In addition, if the "file name creation rule" sets the sequence in the setting item "image quality (resolution)", "number of colors", or "storage method" and if the associated character string is set as "unregistered", the CPU 10 instructs the display portion 6 to display a screen prompting the user to input the character string and uses the inputted character string as the setting value.

When the user inputs a setting value in the setting item prompted to the user at S303, or there is no "unregistered" setting item at S302 (S302: No), the scanning portion 3 executes scanning of a document (S304). Then, the CPU 10 performs image processing on the image data obtained from the scanning portion 3 on the basis of a pre-registered setting value or a setting value that the user input later, and then creates an image data file in a RAM 12.

Next, the CPU 10 creates a file name of the image data and assigns the file name to the image data (S305). The entire flow of the file name creation and assignment process is the same as that of the normal scan process (see FIG. 4). When a file name candidate is created (S201), the file name is created by a method based on the contents registered by the file name creation rule for the pressed one-touch key 5B as described below. The CPU 10 assigns the file name to the image data, stores the image data by a set storage method, and then, completes the simple scan process.

(Specific examples of registration contents of one-touch keys)

Hereinafter, specific examples of registration contents of one-touch keys and the operation based on the registration content will be described with reference to FIGS. 6 to 9.

As shown in FIG. 6, when a one-touch key 5B in which the setting values of all the seven setting items are registered is pressed, scanning will start immediately without prompting the user to input a setting value. In this example, the CPU 10 confirms that there is no setting value set to "not used" in the "file name creation rule". Then, the CPU 10 creates a file name candidate according to the sequence of the setting values of the "file name creation rule" by using a character string set in "arbitrary character string", a sequential number with the number of digits set in "number of digits of sequential number", an extension specified in "file format", character strings associated with the setting values set in "image quality (resolution)", "number of colors", and "storage method", and a character set in "delimiter". The adjustment of the number of digits of the sequential number and determination of the numerical value of the sequential number are performed on the file name candidate as described above. Then, a file name such as "Pict-ftp-TC-200dpi-00002.jpg" is assigned to the image data and the image data is stored in an FTP server 21.

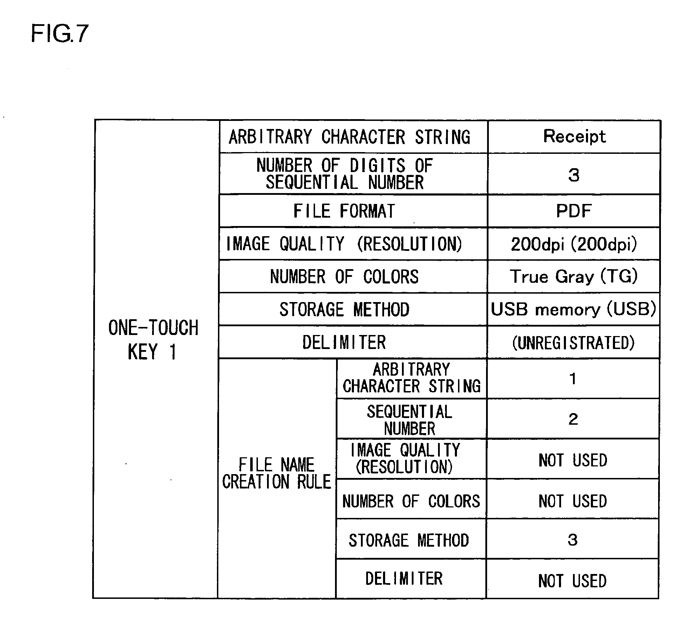

Alternatively, when a one-touch key 5B with the registration contents shown in FIG. 7 which are different from the registration contents shown in FIG. 6 is pressed, scanning will start immediately without prompting the user to input a setting value. In this example, "not used" is set in the setting items "image quality (resolution)", "number of colors" and "delimiter" of "file name creation rule". Thus, the corresponding character string is not used as the file name. Here, a file name such as "Receipt002USB.pdf" is assigned to the image data and the image data is stored in a USB memory 25.

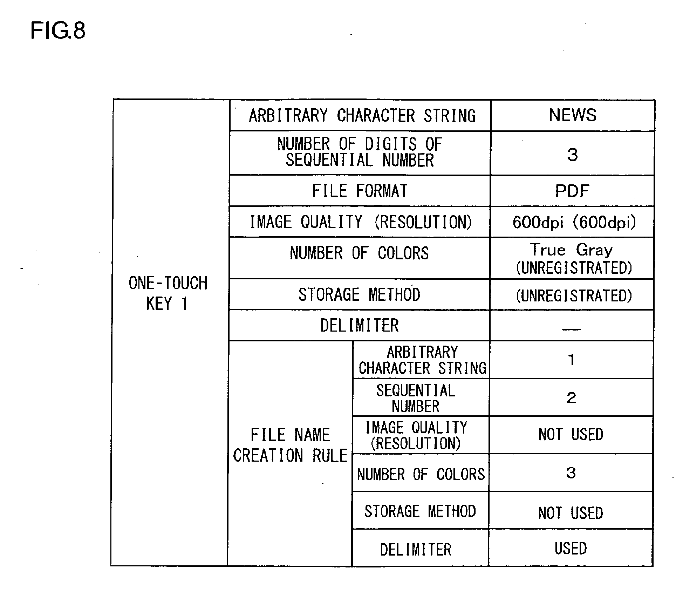

Alternatively, when a one-touch key 5B with different registration contents shown in FIG. 8 is pressed, the user is prompted to input a setting value for "storage method" and to input a character string for "number of colors" from the operation portion 5 (S303). Then, scanning is executed. As a result, a file name is created by use of a character string associated with "number of colors" inputted by the user. For example, if "TG" is inputted as the character string, a file name such as "NEWS_005_TG.pdf" is assigned to the image data and the image data is stored on the basis of a setting value for "storage method" inputted by the user.

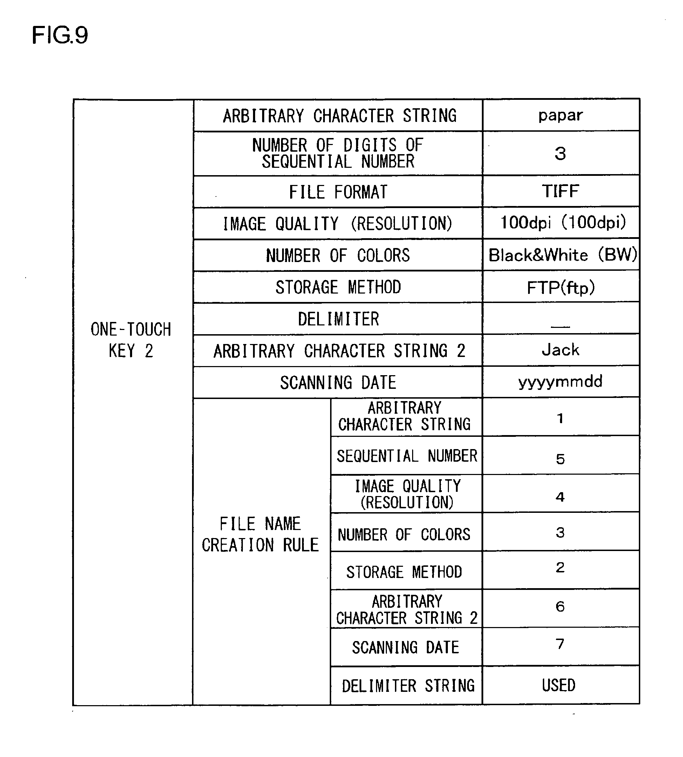

The registration contents of the one-touch key 5B shown in FIG. 9 are different in that two setting items "arbitrary character string 2" and "scanning date" are added. The user registers another character string as "arbitrary character string 2" in the same way as described above. "scanning date" contains a setting value specifying a method of expressing the scanning date to be included in the file name. For example, if the setting value is "yyyymmdd", a numerical value indicating the scanning date listing year, month, and day in that order is used as the file name. When the one-touch key 5B with this registration content is pressed, a file name such as "paper_ftp_BW_100dpi_24_Jack_20061114.tif" is assigned to the image data.

As described above, according to this illustrative aspect, a file name including a character string associated with a scan condition or a storage method can be assigned to image data, thus reducing the time and efforts for the user to input a file name. In addition, when the user looks at the file name at a later time, the user can easily remember the purpose of creating the image data, thus facilitating the file management.

In addition, when the user looks at the file name, the user can easily recognize the purpose of the image data since the file name contains a character string indicating the resolution, monochrome or color condition when obtaining the image data, thus assuring easy management.

In addition, a scan condition or a storage method can be assigned to a key and the corresponding setting value is read by a key operation, thus facilitating the setting of scan conditions and the like.

In addition, the user is prompted to input a part of a plurality of setting items for key operation, thus increasing the flexibility of the setting method and usability.

In addition, an arbitrary character string can be associated with a setting value of a scan condition or a storage method of image data and the character string can be used as a file name, thus increasing the usability.

In addition, the user can input a character string to be used as a file name, thus preventing an unwanted character string from being assigned to the file name.

In addition, it is possible to set the sequence of arranging character strings to create a file name from a plurality of character strings associated with a plurality of setting values such as scan conditions, thus increasing the flexibility of the file name creation method and usability.

In addition, a character string to be used as a file name can be selected from a plurality of character strings associated with setting values of the scan condition and the storage method. Accordingly, an unnecessary character string can be removed from a file name to simplify the file name.

In addition, the file name length can be controlled to be less than or equal to a predetermined length, thus preventing the user from being difficult to manage a file name. Especially, according to this illustrative aspect, the file name length can be controlled to be less than or equal to a limited number of characters for use in the destination in which image data is stored. Accordingly, an error due to a longer file name can be prevented from occurring.

In addition, when the user inputs a plurality of setting contents, it is possible to determine the sequence for each setting content in a file name to be created, and to set the sequence of arranging character strings to create a file name, thus increasing the user's flexibility of the file name creation method and usability.

In addition, it is possible to check a setting item of a plurality of setting items related to the scan condition to determine whether or not its setting content is used as a part of a file name, thus increasing the flexibility of the file name creation method and usability.

In addition, it is possible to display a plurality of setting content candidates to be set in a setting item related to the scan condition, and to select a desired setting content from the candidates, thus increasing the operability and usability.

In addition, when a desired key of a plurality of keys is operated, the setting content corresponding to the key is read from the registration portion, thus facilitating the setting of a scan condition.

In addition, when a desired key of a plurality of keys is operated, the setting content and the file name creation rule corresponding to the key are read, and a file name is created under the read creation rule, thus increasing the operability and usability.

In addition, setting contents for a plurality of setting items related to scan conditions are grouped into one set, and different sets of setting contents can be associated with a plurality of keys for registration, thus increasing the operability and usability.

In addition, it is possible to set the sequence of setting contents in a file name to be created such that the sequence of an arbitrary character string inputted by the user is set first. Accordingly, the user can easily recognize the image data by seeing the file name, thus facilitating the management.

This illustrative aspect shows an example in which the present invention is applied to a multifunction device, but the present invention can also be applied to an image scanning device without a printer function, a copy function, or facsimile function, provided that the image scanning device has at least a scanner function.

This illustrative aspect shows an example in which an assigned setting value is called by an operation of pressing a one-touch key (button), but when a touch panel liquid crystal display is used, an assigned setting value may be called by an operation of touching a key displayed on the display screen.

According to the present invention, as a character string corresponding to the storage method, any character string indicating a destination folder name for storage or a destination address of an email may be used in the file name.

## Claims

1. An image scanning device comprising:
an input portion capable of inputting a setting value of a setting item related to a scan condition;
a scanning portion capable of scanning a document on the basis of the setting value to obtain image data; and
a control portion capable of creating a file name using a character string associated with the setting value, assigning the created file name to the image data obtained by the scanning portion, and storing the image data.

2. The image scanning device according to claim 1, wherein the scan condition includes at least one of a resolution and a monochrome or color condition.

3. An image scanning device comprising:
an input portion capable of inputting a setting value of a setting item related to a storage method of image data;
a scanning portion capable of scanning a document to obtain image data; and
a control portion capable of creating a file name using a character string associated with the setting value, assigning the file name to the image data obtained by the scanning portion, and storing the image data by the storage method.

4. The image scanning device according to any one of claims 1 to 3, wherein the input portion has a key;
an allocation portion is capable of allocating a specific setting value to the key; and
the control portion reads the setting value allocated to the key by operation of the key.

5. The image scanning device according to claim 4, wherein the control portion instructs the input portion to input a part of setting values of a plurality of setting items in response to the key operation.

6. The image scanning device according to any one of claims 1 to 5, wherein an association portion is capable of associating the setting value with a character string to be used as a file name.

7. The image scanning device according to any one of claims 1 to 6, wherein the input portion can input character information; and
the control portion uses a character string inputted by the input portion as a file name if there is no character string associated with the setting value.

8. The image scanning device according to any one of claims 1 to 7, wherein a sequence setting portion is capable of setting the sequence of character strings when the control portion creates a file name from a plurality of character strings associated with a setting value of each of the plurality of setting items.

9. The image scanning device according to any one of claims 1 to 8, wherein a selection portion is capable of selecting a character string used when the control portion creates a file name from a plurality of character strings associated with a setting value of a plurality of setting items.

10. The image scanning device according to any one of claims 1 to 9, wherein the control portion creates a file name by a combination of a sequential number and a character string associated with the setting value, and determines the number of digits of the sequential number such that the number of characters of the file name is less than or equal to the predetermined number.

11. An image scanning device comprising:
a scanning portion capable of scanning a document to obtain image data;
an input portion capable of allowing the user to input a setting content of a setting item related to a scan condition for the scanning portion to scan the document;
a file name creation portion capable of creating a file name under a predetermined creation rule on the basis of the setting content inputted by the input portion;
a file name assignment portion capable of assigning the created file name to the image data obtained by the scanning portion; and
a storage portion capable of storing the image data using the assigned file name.

12. The image scanning device according to claim 11, wherein the input portion can input a setting content of each of the plurality of setting items related to the scan condition; and
the file name creation portion creates a file name using characters indicating a plurality of the inputted setting contents in the sequence predetermined under the creation rule.

13. The image scanning device according to claim 11 or 12, wherein for a plurality of setting items related to the scan condition, the creation rule determines whether or not a character indicating the setting content is used as a part of the file name.

14. The image scanning device according to any one of claims 11 to 13, comprising:
a candidate display portion capable of displaying a candidate of a plurality of setting contents to be set in a setting item related to a scan condition for the scanning portion to scan the document; and
a candidate selection portion capable of selecting a desired setting content from a plurality of the displayed candidates under the operation of the input portion.

15. The image scanning device according to any one of claims 11 to 14, wherein the input portion has a plurality of keys,
the image scanning device comprising:
a registration portion capable of registering a plurality of setting contents different from each other for a setting item related to the scan condition by associating the setting contents with the plurality of keys; and
a read portion capable of reading a setting content corresponding to an operated key from the registration portion by the operation of a desired key of the plurality of keys.

16. The image scanning device according to claim 15, wherein the registration portion registers the creation rule predetermined for each of the plurality of keys;
the read portion reads a setting content and a creation rule corresponding to the operated key from the registration portion by the operation of a desired key of the plurality of keys; and
the file name creation portion creates a file name under the read creation rule.

17. The image scanning device according to claim 15 or 16, wherein the registration portion registers setting contents by grouping the setting contents of a plurality of setting items related to the scan condition into a set of setting contents and associating different sets of setting contents with each of the plurality of keys.

18. The image scanning device according to any one of claims 11 to 17, wherein the setting item related to the scan condition includes at least one of a monochrome or color condition and a resolution.

19. The image scanning device according to any one of claims 11 to 18, wherein the setting item related to the scan condition includes a storage method by which the storage portion stores image data.

20. The image scanning device according to claim 12, wherein the input portion allows the user to input an arbitrary character string as one of the plurality of setting items related to the scan condition; and
the creation rule determines that the inputted arbitrary character string comes first of the sequence of characters indicating the inputted plurality of setting contents in the file name to be created.
